# EUROPÄISCHE PATENTSCHRIFT

(11) **EP 0 818 066 B1**
(45) Veröffentlichungstag und Bekanntmachung des Hinweises auf die Patenterteilung: **09.06.1999**
(21) Anmeldenummer: 96907276.8
(22) Anmeldetag: 26.03.1996
(51) Int. Cl.: H01R 13/717

(54) **ELEKTRISCHES VERBINDUNGSTEIL MIT KONTAKTSTIFTEN ODER -BUCHSEN, WIE STECKER ODER KUPPLUNG**
ELECTRICAL CONNECTOR WITH CONTACT PINS OR SOCKETS, LIKE A PLUG OR COUPLING
CONNECTEUR ELECTRIQUE AVEC FICHES MALES OU FEMELLES, TEL QUE PRISE OU PROLONGATEUR

(30) Priorität: 26.03.1995 DE 19510467; 06.04.1995 DE 19512915
(43) Veröffentlichungstag der Anmeldung: 14.01.1998
(73) Patentinhaber: PEPPERL + FUCHS GMBH, D-68307 Mannheim (DE)
(72) Erfinder: SEEFRIED, Roland, D-69121 Heidelberg (DE)
(74) Vertreter: Mierswa, Klaus, Dipl.-Ing.
(86) Internationale Anmeldenummer: DE9600522
(87) Internationale Veröffentlichungsnummer: WO9630972

(56) Entgegenhaltungen:
- DE-A- 4 123 788
- DE-C- 3 637 191
- DE-U- 8 201 605
- DE-U- 9 115 984

## Beschreibung

### Technisches Gebiet:

Die Erfindung betrifft ein elektrisches Verbindungsteil mit elektrisch kontaktierenden Kontaktstiften oder -buchsen, wie Stecker oder Kupplung, welches eine Vorrichtung zum Umlenken von Licht in Vorzugsrichtungen eines Licht aussendenden Leuchtkörpers, wie LED oder sonstige Diode oder Glühbirne, aufweist, insbesondere zur Funktionsanzeige des Leuchtkörpers in Einkapselungen mit Sichtfenstern von elektrischen Schaltungen.

### Stand der Technik:

Bei elektronischen Schaltungen, die in Hülsen oder Gehäusen untergebracht oder eingekapselt sind, wird häufig eine Leuchtdiode oder Glühbirne zur Anzeige bestimmter Zustände der elektrischen Schaltung benötigt. Dabei sollte nach Möglichkeit die Leuchtdiode oder Glühbirne von mehreren Seiten aus zu sehen sein, so daß der Betrachtungswinkel für den Betrachter möglichst groß wird. Dazu ist es bekannt, in Hülsen oder in Gehäuse für Näherungsschalter vier Löcher jeweils in einem Winkel von 90 Grad versetzt zu bohren, durch die dann die Leuchtdiode von vier Seiten aus gesehen werden kann, die normalerweise in einem Steckereinsatz angeordnet ist, der in die Hülse oder in das Gehäuse eingesetzt ist. Der Nachteil derartiger Anordnungen besteht darin, daß bei der Verwendung einer Leuchtdiode diese eine Abstrahlcharakteristik besitzt, die praktisch nur längs der Längsachse der Leuchtdiode bzw. der Hülse strahlt, so daß bei seitlicher Ansicht durch die seitlich angeordneten Fenster die Leuchtdiode nur schwach leuchtend scheint. Bei kleinen Betriebsströmen der Leuchtdiode und bei Abstrahlung in Richtung der Achse der Hülse oder des Gehäuses bleibt somit kaum mehr Licht übrig, welches radial durch die Sichtfenster heraustreten kann.

Durch die DE 37 03 423 A1 ist eine mehrpolige elektrische Steckverbinder-Vorrichtung bekannt geworden, die aus einem Kabelstecker und aus einem Geräteteil mit einem Frontsteckteil zur Aufnahme des Kabelsteckers besteht. Der Kabelstecker ist mit Lichtleitern versehen, um daran den Funktionszustand des Geräteteils überwachen zu können. Innerhalb des Kabelsteckers sind Lichtleitmittel vorgesehen, die rechtwinklig geformte starre Stäbe aus klarsichtigem Kunststoff mit einer in der Abknickung des Stabes angeordneten Reflexionsfläche sind, die eine Neigung von 45 Grad aufweist, so daß eine 90 Grad-Reflektion des den Lichtleiter durchquerenden Lichtes gegeben ist.

Durch die GB 607922 A sind Lampen bekannt, die massive, gekrümmte, armförmige Lichtleitkörper verschiedener Formgebung aufweisen, an deren einen stirnseitigen Ende eine Glühbirne angeordnet ist, deren Licht am anderen Ende des Lichtleitkörpers austritt. Derartige Lichtleitkörper sind auch durch die Literaturstelle Blumenfeld, A.M. und Jones S.E.: Parts That Glow, in: Machine Design, 29.10.1959, Seite 94-103, bekannt.

Durch die US 5,349,504 ist ein scheibenförmiger Lichtleitkörper aus klarsichtigem Kunststoff in Form von Viertelkreisen bekannt, die in paralleler Anordnung zu einer Bank zusammengefaßt sind. An einer stirnseitigen radialen Begrenzungsfläche je einer Scheibe sind Dioden angeordnet, deren Licht innerhalb der Scheibe um 90 Grad umgelenkt wird, welches nach Reflexion an der gekrümmten Begrenzungsfläche der Scheibe umgelenkt wird und ungefähr rechtwinklig durch zwei an der Scheibe angeordnete Arme wieder austritt, die rechtwinklig zu derjenigen Begrenzungsfläche gerichtet sind, in der die Dioden sich befinden, so daß eine 90 Grad-Reflexion des Lichtes gegeben ist. Die Bank ist mit Stiften auf eine Leiterplatte aufsteckbar.

Aus der DE-U-8201605 ist ein Zwischenstecker bekannt, der elektrisch kontaktierende Kontaktstifte oder -buchsen und auf einer Seite ein Aufnahmeteil in Form einer Kappe aufweist, in das ein Lichtleitkörper aus transparenten Material als ein Zwischensteckkörper mit mindestens einem Leuchtkörper eingesetzt ist. Das Licht wird ohne Umlenkung diffus ringförmig oder punktförmig durch den transparenten Zwischensteckkörper nach außen geleitet.

### Technische Aufgabe:

Der Erfindung liegt die Aufgabe zugrunde, ein elektrisches Verbindungsteil der genannten Gattung zu schaffen, das zur besseren seitlichen Sichtbarmachung der Strahlung eines Leuchtkörpers diese vorzugsweise rechtwinklig zur Hauptabstrahlungsrichtung des Leuchtkörpers bzw. des Gehäuses umlenkt, innerhalb desselben sich der Leuchtkörper befindet, so daß von einer Mehrzahl von Seiten des Verbindungsteils der Leuchtkörper hell-leuchtend zu sehen ist.

### Offenbarung der Erfindung und deren Vorteile:

Die Lösung der Aufgabe besteht erfindungsgemäß in einem elektrischen Verbindungsteil mit elektrisch kontaktierenden Kontaktstiften oder -buchsen, wie Stecker oder Kupplung, welches auf einer Seite ein Aufnahmeteil aufweist, in das ein Lichtleitkörper aus transmissivem Material mit mindestens einem Leuchtkörper eingesetzt ist und durch das Zuleitungen für die Kontaktstifte geführt sind, wobei der Lichtleitkörper wenigstens zwei Arme besitzt, die an ihren aneinanderstoßenden Enden auf der dem Leuchtkörper gegenüberliegenden Seite jeweils eine in Richtung der Längsachse der Hauptstrahlungsrichtung des Leuchtkörpers elipsoid- oder paraboloid- oder zylinderförmig oder eben-pyramidal geformte Oberfläche aufweisen, die jeweils die reflektierende Umlenkfläche des jeweiligen Armes bilden und die das Licht hauptsächlich in Achsrichtung innerhalb des jeweiligen Armes in einem Winkel von zirka 90 Grad zu dessen Hauptabstrahlungsrichtung in der Weise umzulenken imstande sind, daß das Licht durch die nach außen weisenden Stirnflächen der Arme nach außen tritt, wobei die reflektierenden Umlenkflächen der Arme jeweils in der Achse der Hauptstrahlungsrichtung des Leuchtkörpers in einer in den Lichtleitkörper weisenden Spitze oder Kante gemeinsam zusammenstoßen, wobei der Lichtleitkörper unterhalb der Spitze oder Kante eine Aussparung aufweist, in der der Leuchtkörper angeordnet ist, der innerhalb der Aussparung in den Bereich der aneinanderstoßenden Enden der Arme reicht und die Aussparung bis unterhalb der Spitze reicht.

Das erfindungsgemäße elektrische Verbindungsteil besitzt den Vorteil, daß es das vom Leuchtkörper, wie Lumineszenzelement, LED oder sonstige Diode oder Glühbirne, ausgehende sichtbare Licht oder Infrarotlicht oder UV-Licht aus der Richtung der Hauptabstrahlungsrichtung des Leuchtkörpers, das ist insbesondere die Längsachse des Leuchtkörpers, umlenkt und seitlich reflektiert, so daß das reflektierte Licht in einem Winkel zwischen ca. 40 bis 140 Grad austritt entsprechend der Richtung der Arme, die bezüglich der Mittelachse des Lichtleitkörpers ebenfalls zwischen ca. 40 bis 140 Grad betragen kann. Bei einer Ausgestaltung des Lichtleitkörpers mit einem Umlenkwinkel von ca. 90 Grad besteht dieser vorzugsweise aus zwei sich rechtwinklig kreuzenden, in einer Ebene liegenden Armpaaren gleicher Länge in antiparalleler Richtung, so daß das Licht des Leuchtkörpers hauptsächlich rechtwinklig bezüglich der Hauptabstrahlungsrichtung des Leuchtkörpers umgelenkt wird. Dadurch ist der Leuchtkörper hell-leuchtend seitlich am Umfang einer Hülse oder eines Gehäuses zu sehen oder zu detektieren, weil der weitaus größte Anteil der Strahlung des Leuchtkörpers umgelenkt wird und durch die äußeren Stirnflächen der Arme nach außen tritt. Im Bereich dieser Stirnflächen der Arme befinden sich innerhalb einer Hülse oder eines Gehäuses Sichtfenster, so daß der Leuchtkörper von außen gut zu sehen oder zu detektieren ist. Der Lichtleitkörper wirkt somit vorteilhaft als Kollimator.

Des weiteren kann die Erhöhung der Leuchtdichte nicht nur dadurch erreicht werden, daß das Licht aus der Längsachse des Leuchtkörpers um einen vorgegebenen Winkel, vorzugsweise 90 Grad, abgelenkt wird, sondern auch dadurch, daß es in die Arme und in den Armen selbst gebündelt wird. Die Ablenkung erfolgt somit in bevorzugte Richtungen. Die Arme können an einem Ende des Lichtleitkörpers radial angeformt sein und zwei sich kreuzende, in einer Ebene liegende, antiparallele Armpaare bilden, wobei die Arme massiv ausgeführt sind.

Der Stecker kann vorteilhaft auf der dem Leuchtkörper gegenüberliegenden Seite einen Becher aufweisen, der auf den Armen des Lichtleitkörpers aufsitzt und der die Kontaktstifte beherbergt, wobei Stecker und Becher zylindrisch oder quaderförmig gestaltet sind und die Stirnflächen der Arme in der Mantel ebene des Zylinders oder den Begrenzungsflächen des Quaders des Steckers liegen. Des weiteren kann der Lichtleitkörper zwei oder drei oder fünf oder sechs sternförmig angeordnete Arme aufweisen, die voneinander gleiche Bogenabstände besitzen, wobei der Leuchtkörper mittig oder außermittig unterhalb der aneinanderstoßenden Enden der Arme angeordnet ist. Die geneigten Oberflächen der sich gegenüberstehenden Arme des Lichtleitkörpers, die jeweils die reflektierende Umlenkfläche des jeweiligen Armes bildet, können jeweils als holographische Linsen oder holographische Spiegel ausgebildet sein. Der Lichtleitkörper selbst kann das Licht wenigstens eines Leuchtkörpers in wenigstens eine oder mehrere Vorzugsrichtungen bündeln. Das von einem Leuchtkörper ausgehende und sich im Lichtleitkörper ausbreitende Licht kann über eine Spiegelfläche desselben auf wenigstens zwei unterschiedliche Refexionsflächen zweier unterschiedlicher Arme geworfen und fokussiert aus den Armen austreten. Des weiteren kann der Leuchtkörper mit dem Lichtleitkörper identisch sein und die gewünschte Form des Lichtleitkörpers aufweisen.

Die reflektierenden Umlenkflächen können aufgrund Totalreflexion reflektieren oder in Richtung nach innen zum Lichtleitkörper mit einer Spiegelschicht verspiegelt sein. Die geneigten Oberflächen, die jeweils die reflektierende Umlenkfläche für den jeweiligen Arm bilden, können als Erhebung mit geneigten Oberflächen innerhalb der Aussparung für den Leuchtkörper am Fuße der Aussparung angeordnet sein. Ebenso kann der Lichtleitkörper mehrfache einander zugeordnete, geneigte und reflektierende Oberflächen besitzen, wobei jeweils zwischen einander zugeordneten Oberflächen von einem Leuchtkörper ausgehende Lichtbündel mehrfach innerhalb des Lichtleitkörpers reflektiert und nach außerhalb des Lichtleitkörpers geleitet werden.

Statt eines Leuchtkörpers können eine Mehrzahl von Leuchtkörpern innerhalb ein- und desselben Lichtleitkörpers zur Anwendung gelangen. Der Lichtleitkörper kann zylindrisch oder quaderförmig gestaltet sein, die Armpaare können gleiche Länge in antiparalleler Richtung aufweisen. An einem Ende des Lichtleitkörpers können die Arme radial angeformt sein und zwei sich kreuzende, in einer Ebene liegende, antiparallele Armpaare bilden. Die Arme sind vorzugsweise massiv ausgeführt.

Die reflektierenden Umlenkflächen der Arme können jeweils ein Teil eines Ellipsoids oder Paraboloids oder Zylindermantels oder ebene Flächen sein, die einen Umlenkwinkel von zirka 90 Grad aufweisen, wobei der Leuchtkörper innerhalb der Aussparung in den Bereich der aneinanderstoßenden Enden der Arme reicht und die Aussparung bis unterhalb der Spitze reicht.

Kurzbeschreibung der Zeichnung, in der zeigen:

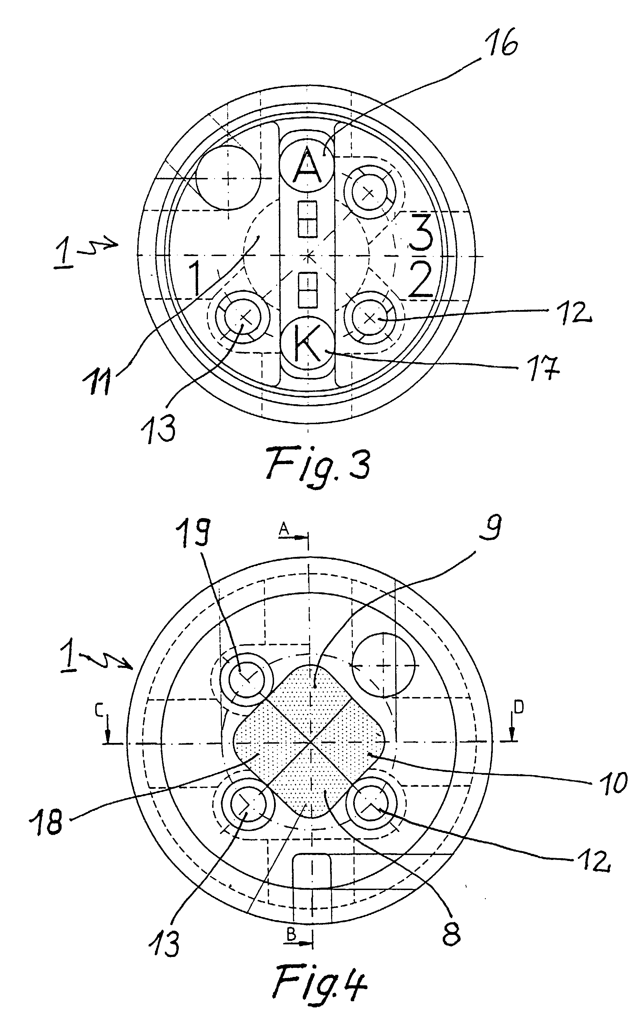

- Figur 1: einen Querschnitt durch ein elektrisches Verbindungsteil mit einem Lichtleitkörper und mit einem Leuchtkörper, der einen Schnitt längs der Linie A-B in Figur 4 darstellt
- Figur 2: einen um 90 Grad gegenüber der Figur 1 gedrehten Schnitt längs der Linie C-D in Figur 4
- Figur 3: eine Draufsicht auf die untere Stirnfläche des elektrischen Verbindungsteils, durch die der Leuchtkörper eingeführt ist
- Figur 4: eine Draufsicht auf das elektrische Verbindungsteil von oben in den Becher und auf die Kontaktstifte sowie auf die Umlenkflächen

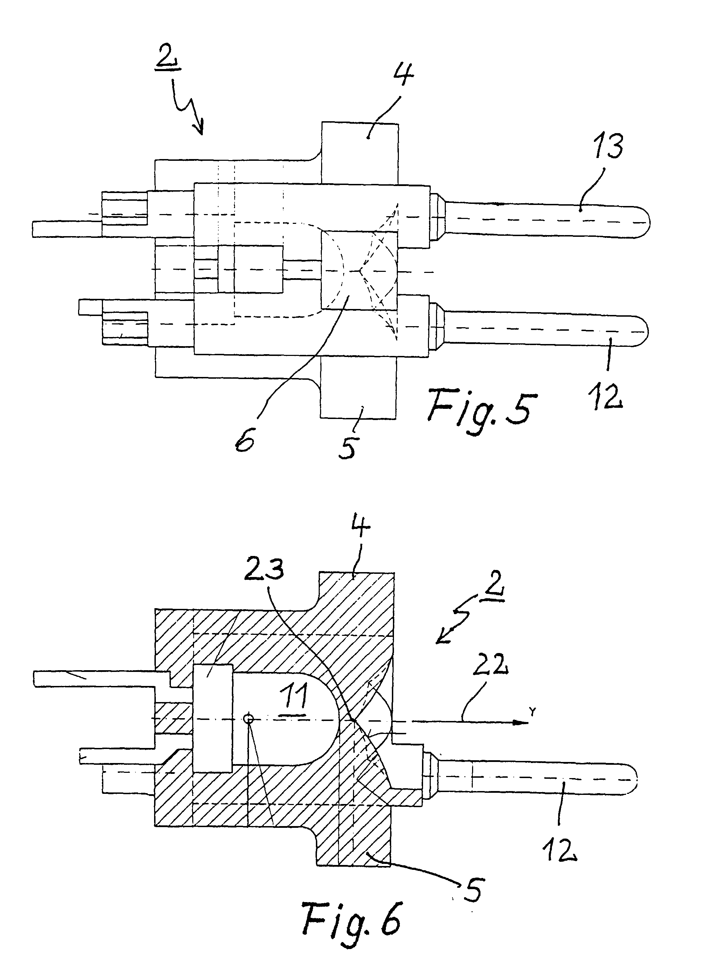

- Figur 5: eine Ansicht des Lichtleitkörpers mit Kontaktstiften und Zuleitungen
- Figur 6: einen Schnitt durch den Lichtleitkörper und

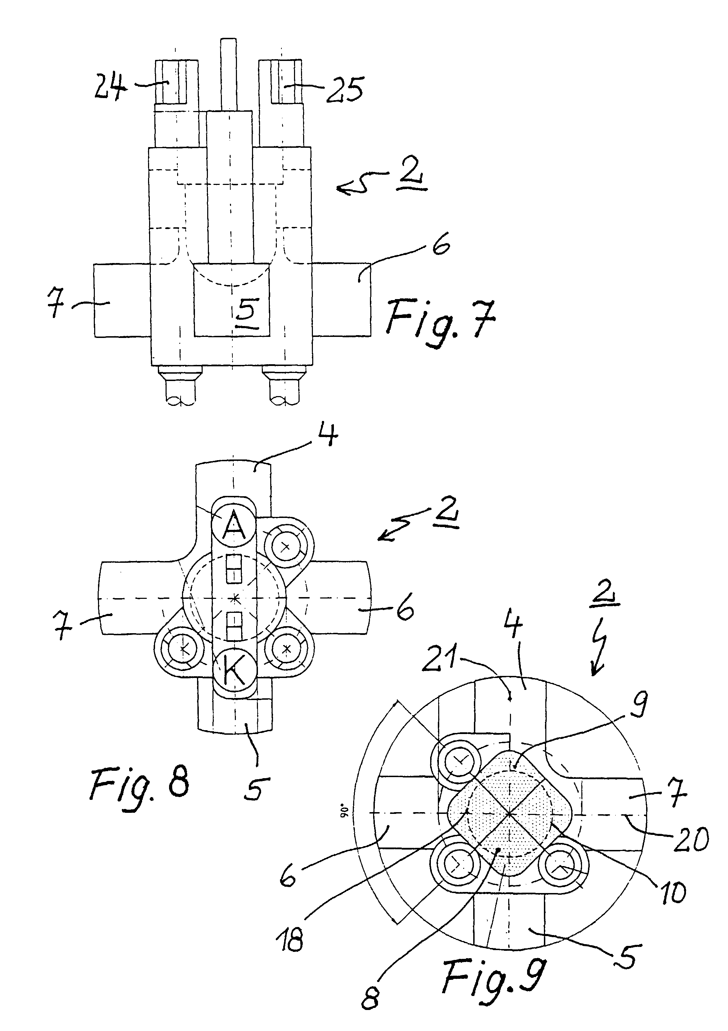

- Figur 7: eine um 90 Grad gedrehte Ansicht desselben gemäß Figur 5
- Figur 8: eine Draufsicht auf die Stirnfläche des Lichtleitkörpers in Richtung des Leuchtkörpers
- Figur 9: eine Draufsicht auf die entgegengesetzte obere Stirnfläche des Lichtleitkörpers in Richtung der Kontaktstifte
- Figur 10: einen Schnitt durch einen Lichtleitkörper mit innerhalb des Lichtleitkörpers liegenden geneigten und reflektierenden Oberflächen, beispielsweise innerhalb der Aufnahmebohrung für den Leuchtkörper
- Figur 11: einen Schnitt durch einen weiteren Lichtleitkörper mit mehrfachen, reflektierenden Oberflächen, wobei das reflektierte Licht mehrfach innerhalb des Lichtleitkörpers reflektiert wird
- Figur 12: ein Beispiel eines Lichtleitkörpers mit zwei Leuchtkörpern für unterschiedliche Arme des Lichtleitkörpers und
- Figur 13: ein Beispiel eines Lichtleitkörpers, der selbst das Licht wenigstens eines Leuchtkörpers fokussiert bzw. bündelt.

In den Figuren ist ein elektrisches Verbindungsteil als Stecker 1 in verschiedenen Ansichten und Schnitten dargestellt, in welchem ein spezifisch geformter Lichtleitkörper 2 angeordnet ist, der auf die Bedürfnisse des Steckers 1 ausgerichtet ist und der aus einem transmissiven bzw. durchsichtigen Material besteht und als Formteil hergestellt ist.

Der Lichtleitkörper 2 besteht im wesentlichen aus zwei sich kreuzenden, vorzugsweise rechtwinklig kreuzenden, in einer Ebene liegenden Armpaaren 4, 5, 6, 7, die vorzugsweise gleiche Länge aufweisen, wobei jeweils die Arme 4, 5 bzw. 6, 7 eines Armpaares antiparallel gerichtet sein können. An diese Armpaare 4, 5 bzw. 6, 7 ist auf der einen Seite zentrisch ein zylindrischer oder quaderförmiger Körper 26 angeformt, der eine Aussparung 15 aufweist, die vorzugsweise als Sackloch 15 gestaltet ist und die zur Aufnahme eines Leuchtkörpers 11 dient, der vorzugsweise eine Lumineszenzdiode, LED oder sonstige Diode oder auch eine Glühbirne sein kann. An den aneinanderstoßenden Enden der jeweiligen Arme 4, 5, 6, 7 sind auf der dem Leuchtkörper 11 gegenüberliegenden Seite jeweils eine in Richtung der Längsachse 22 der Hauptstrahlungsrichtung des Leuchtkörpers 11 bzw. der Mittelachse des Lichtleitkörpers konkav gekrümmte Oberflächen angeformt, die jeweils die reflektierende Umlenkfläche 8, 9, 10, 18 des jeweiligen Armes 4,5,6,7 bildet. Diese Umlenkflächen sind jeweils Teil eines Ellipsoids oder Paraboloids oder Zylindermantels oder Teil von eben-geneigten Flächen, wobei diese Umlenkflächen - bei wenigstens drei sich sternförmig treffenden Armen - in der Achse 22 der Hauptstrahlungsrichtung des Leuchtkörpers 11 in einer in den Lichtleitkörper 2 weisenden Spitze 23 gemeinsam zusammenstoßen und das reflektierte Licht innerhalb der Arme 4,5,6,7 umlenken. Es stoßen jeweils die elliptisch oder parabolisch oder sonstwie geformte Umlenkflächen aneinander. Die reflektierenden Umlenkflächen 8,9,10,18 der Arme 4,5,6,7 können entweder gemäß Totalreflexion reflektieren oder die Umlenkflächen können in Richtung nach innen zum Lichtleitkörper 2 mit einer Spiegelschicht verspiegelt sein.

Die Form der Oberflächenkrümmung oder -neigung der reflektierenden Umlenkflächen kann beliebig sein, die reflektierenden Umlenkflächen können außen am Lichtleitkörper oder innerhalb des Lichtleitkörpers angeordnet sein. Besitzt beispielsweise die Vorrichtung vier Arme mit jeweils einer ebengeneigten Umlenkfläche, so schließen die Umlenkflächen eine auf die Spitze gestellte Pyramide ein; besitzt die Vorrichtung nur zwei sich gegenüberstehende Arme mit eben-geneigten Umlenkflächen, so schließen diese ein Prisma ein. Ebenso kann der Lichtleitkörper einstückig ausgeführt sein oder aus mehreren Teilen zusammengesetzt sein.

Vorteilhafterweise ist die gewählte Form für die Umlenkflächen ein Ellipsoid, dessen einer Brennpunkt der Leuchtkörper 11 und dessen anderer Brennpunkt das Auge des Betrachters ist. Auf diese Weise ist der Lichtausfall durch die äußeren Stirnflächen der seitlichen Arme 4, 5, 6, 7 am besten zu sehen.

Der Lichtleitkörper 2 kann in ein Aufnahmeteil 14 eingesetzt sein, welches Teil des elektrischen Verbindungsteils 1 ist. Auf die Arme 4, 5, 6, 7 auf der dem Leuchtkörper 11 gegenüberliegenden Seite und somit den Umlenkflächen 8, 9, 10, 18 zugewandt, ist zentrisch ein Becher 3 des Verbindungsteils 1 aufgesetzt, in den drei Kontaktstifte 12, 13, 19 zur Verbindung mit einer nichtgezeigten Kupplung ragen und der im Boden eine Aussparung für die Umlenkflächen 8, 9, 10, 18 besitzt, wobei die Kontaktstifte 12, 13, 19 in der vorliegenden Ausgestaltung des Lichtleitkörpers 2 fest mit demselben verbunden sein können. Zuleitungen 24, 25 für die Kontaktstifte 12, 13, 19 führen durch das Aufnahmeteil 14 hindurch an den sich kreuzenden Armen 4, 5, 6, 7 vorbei zu den Kontaktstiften 12, 13 und 19. Zuleitungen 16, 17 für den Leuchtkörper 11, vorzugsweise die Anode A und die Kathode K einer LED, ragen durch die untere Stirnfläche des Verbindungsteils 1 zur Kontaktgabe hindurch.

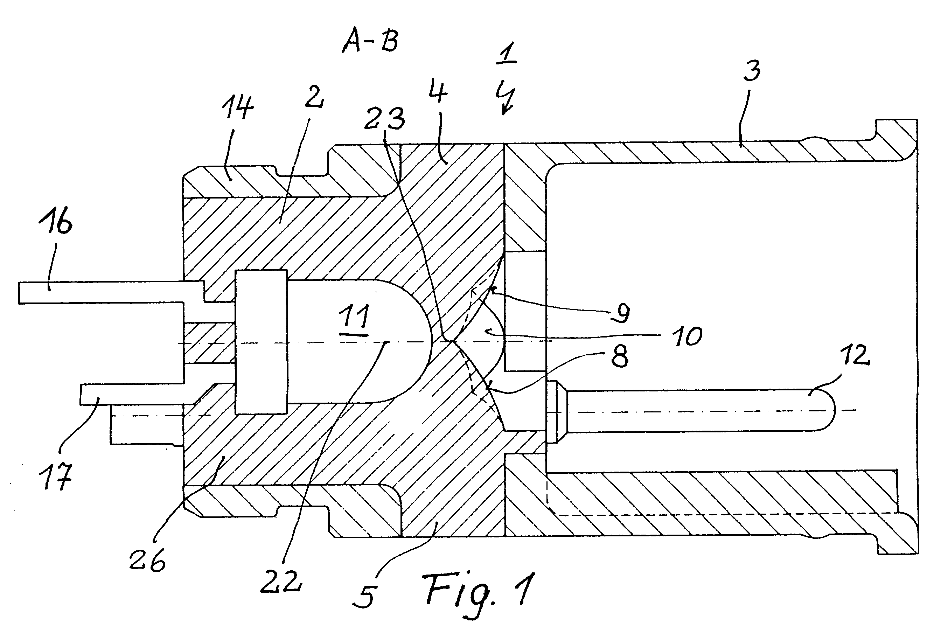

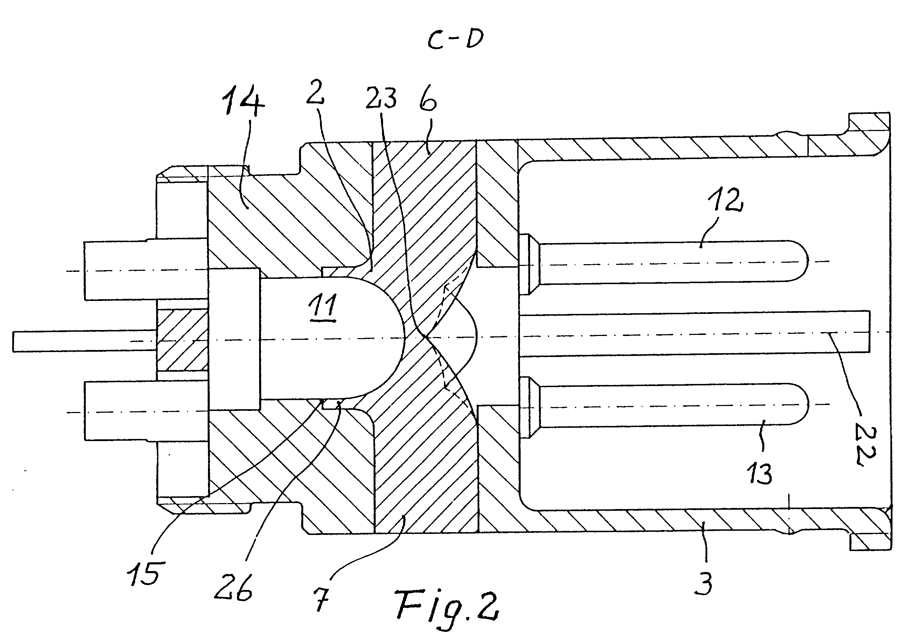

Wie aus den Figuren 1 und 2 ersichtlich, kann das Verbindungsteil 1 ebenfalls eine zylindrische oder auch quaderförmige Gestalt aufweisen, wobei die Stirnflächen der abgewandten Enden der Arme 4, 5, 6, 7 innerhalb der Mantelfläche oder den Seitenflächen des Verbindungsteils 1 liegen.

Der Lichtleitkörper 2 kann in seiner erfindungsgemäßen Ausgestaltung im einfachsten Fall aus sternförmig zusammenstoßenden Armen oder auch nur aus zwei Armen mit zentrisch angeformten Umlenkflächen auch ohne Kontaktstifte ausgestaltet sein und auch in anderen Anwendungen als in einem elektrischen Verbindungsteil eingesetzt werden.

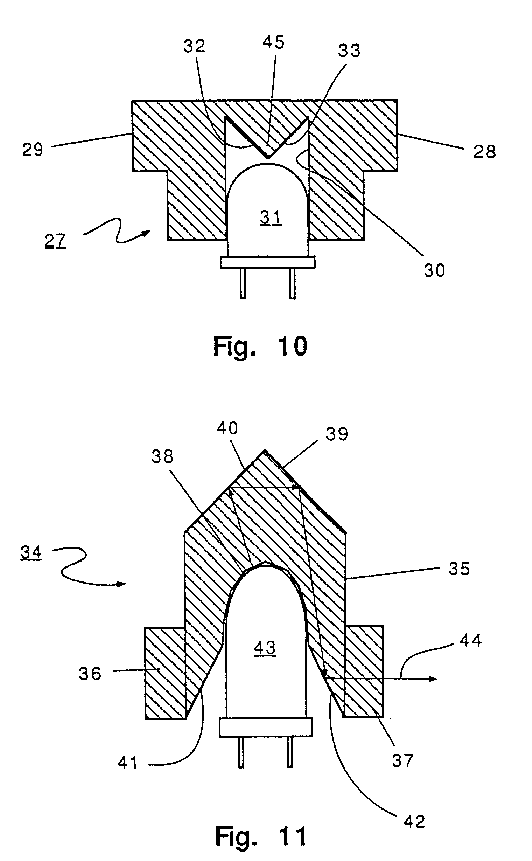

Die Figuren 10 und 11 zeigen zwei weitere Beispiele von Lichtleitkörpern 27, 34, wobei in Figur 10 ein Schnitt durch einen Lichtleitkörper 27 mit Armen 28, 29 sowie mit innerhalb des Lichtleitkörpers 27 liegenden geneigten und reflektierenden Oberflächen 32, 33 dargestellt ist, beispielsweise innerhalb einer Aufnahmebohrung 30 für einen Leuchtkörper 31. Der Lichtleitkörper 27 ist wiederum als Kollimator gestaltet und kann ein Hohlkörper mit Aufnahmeöffnung 30 sein, die zum Beispiel ein zentrales Sackloch 30 ist, in der der Leuchtkörper 31, zum Beispiel eine Diode 31, angeordnet ist. Am Fuße des Sackloches ist innen zentrisch eine Erhebung 45 mit schräg geneigten Begrenzungsflächen 32, 33 angeordnet, beispielsweise ein Kegel oder eine Pyramide oder ein Prisma 45, die das auf sie fallende Licht umlenken und durch die Arme 28, 29 des Lichtleitkörpers 27. Ebenso kann die reflektierende Erhebung 45 innerhalb des Sackloches 30 ein spitz zulaufender Konus mit peripher umlaufender Mantelfläche sein.

Figur 11 zeigt einen Schnitt durch einen Lichtleitkörper 34, der als Hohlkörper mit einem Sackloch 38 zur Aufnahme eines Leuchtkörpers 43 gestaltet ist. An seinem oberen, der Spitze des Leuchtkörpers 43 benachbarten Ende weist der Lichtleitkörper 34 außen liegende, schräg geneigte reflektierende Oberflächen 39, 40 auf, die die Lichtbündel 44 des Leuchtkörpers 43 in das Innere des Lichtleitkörpers 34 reflektieren. Die umgelenkten Lichtbündel 44 gelangen auf am unteren Ende des Lichtleitkörpers 34 befindliche, schräg geneigte Oberflächen 41, 42, die die Lichtbündel 44 wiederum umlenken und durch im unteren Bereich des Lichtleitkörpers 34 angeformte Arme 36, 37 nach außen lenken. Die schräg geneigten Oberflächen 41, 42 können beispielsweise als konische Erweiterung innerhalb eines Teils des Sackloches 38, vorzugsweise im Anfangsbereich desselben, eingeformt sein; ebenso können die Oberflächen 41, 42 schräg geneigte ebene Flächen sein. Diese Ausgestaltung des Lichtleitkörpers 34 besitzt somit mehrfache, einander zugeordnete, geneigte und reflektierende Oberflächen, wobei das reflektierte Licht 44 mehrfach innerhalb des Lichtleitkörpers 34 reflektiert wird. Dadurch können die Arme 36, 37 des Lichtleitkörpers 34 weitgehend beliebig am Lichtleitkörper angeformt werden.

Des Weiteren können die geneigten Oberflächen der sich gegenüberstehenden Arme des Lichtleitkörpers, die jeweils die reflektierende Umlenkfläche des jeweiligen Armes bildet, jeweils holographische Linsen oder holographische Spiegel sein.

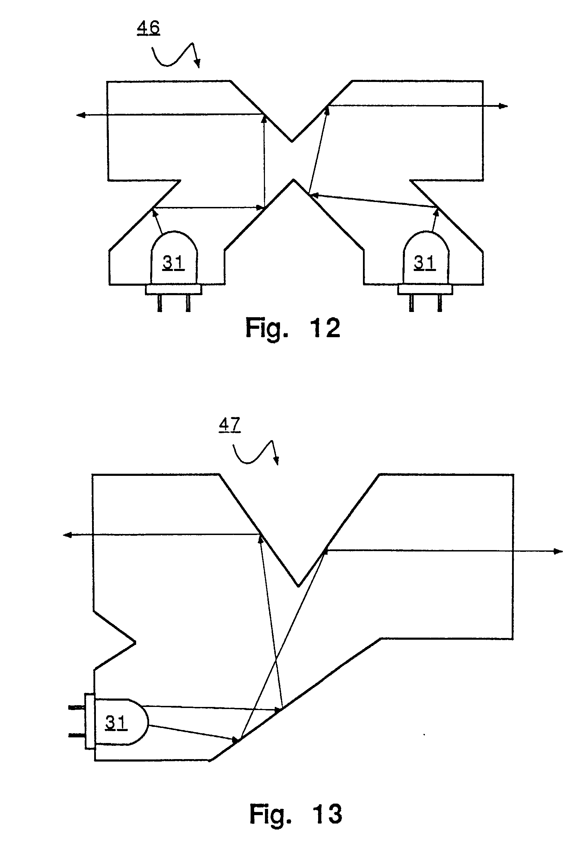

Statt eines Leuchtkörpers kann vorteilhaft auch eine Mehrzahl derselben innerhalb ein- und desselben Lichtleitkörpers 46 zur Anwendung gelangen; ein derartiges Beispiel ist in Figur 12 dargestellt. Ein Lichtleitkörper 46, der beispielsweise spiegelsymmetrisch aufgebaut sein kann, besitzt mehrere Arme mit reflektierenden Flächen. An der Basis des Lichtleitkörpers 46 in zwei sich gegenüberliegenden Ecken ist je eine Leuchtdiode 31 angeordnet, deren Licht über verschiedene Reflexionsflächen des Lichtleitkörpers 46 in je einen der zugeordneten Arme geleitet wird und aus diesem austritt. In diesem Fall können auch verschiedenfarbige Leuchtkörper eingesetzt werden.

Figur 13 zeigt ein weiteres Beispiel eines Lichtleitkörpers 47, der selbst das Licht wenigstens eines Leuchtkörpers 31 in wenigstens eine oder mehrere Vorzugsrichtungen bündelt. Das von wenigstens einem Leuchtkörper 31 ausgehende und sich im Lichtleitkörper 47 ausbreitende Licht wird über mindestens eine Spiegel- oder Reflexionsfläche des Lichtleitkörpers 47 auf wenigstens zwei unterschiedliche Reflexionsflächen wenigstens zweier unterschiedlicher Arme geworfen und dort fokussiert, wonach es aus den dafür vorgesehenen Flächen der Arme aus diesen austritt.

In einer weiteren Ausgestaltung des Verbindungsteils kann der Leuchtkörper mit dem Lichtleitkörper identisch sein und der Leuchtkörper bzw. das Gehäuse des Leuchtkörpers die gewünschte Form des obenbeschriebenen Lichtleitkörpers aufweisen. Beispielsweise sind in diesem Fall am Lichtleitkörper bzw. am Gehäuse des Lichtleitkörpers seitlich das Licht abstrahlende Arme und reflektierende Umlenkflächen angeordnet.

### Gewerbliche Anwendbarkeit:

Das elektrische Verbindungsteil ist vorteilhaft dort einzusetzen, wo ein vollständiger Steckereinsatz zusammen mit einem Leuchtkörper und einem Lichtleitkörper benötigt wird, der in eine Vielzahl von elektronischen Schaltungen zur Überwachung bestimmter anzuzeigender oder zu detektierender Zustände in vorteilhafter Weise eingebaut werden kann.

### Liste der Bezugszeichen:

- 1: Stecker mit Diode
- 2, 27, 34, 46, 47: Lichtleitkörper
- 3: Becher
- 4,5,6,7, 28, 29, 36, 37: Arme
- 8,9,10,18, 32, 3339, 40, 42, 42: Umlenkflächen
- 11, 31, 41: Dioden
- 12,13,19: Stifte
- 14: Aufnahmeteil
- 15, 30, 38: zentrales Sackloch
- 16,17: Zuleitungen der Diode
- 20,21: Achsrichtungen
- 22: Längsachse
- 23: Spitze
- 24,25: Zuleitungen
- 26: Körper
- 44: mehrfach gebrochenes Lichtbündel
- 45: Erhebung

## Patentansprüche

1. Elektrisches Verbindungsteil mit elektrisch kontaktierenden Kontaktstiften (12,13,19) oder -buchsen, wie Stecker oder Kupplung, welches auf einer Seite ein Aufnahmeteil (14) aufweist, in das ein Lichtleitkörper (2) aus transmissivem Material mit mindestens einem Leuchtkörper (11) eingesetzt ist und durch das Zuleitungen (24,25) für die Kontaktstifte (12,13,19) geführt sind, wobei der Lichtleitkörper (2) wenigstens zwei Arme (4,5,6,7) besitzt, die an ihren aneinanderstoßenden Enden auf der dem Leuchtkörper (11) gegenüberliegenden Seite jeweils eine in Richtung der Längsachse (22) der Hauptstrahlungsrichtung des Leuchtkörpers (11) elipsoid- oder paraboloid- oder zylinderförmig oder eben-pyramidal geformte Oberfläche aufweisen, die jeweils die reflektierende Umlenkfläche des jeweiligen Armes (4,5,6,7) bilden und die das Licht hauptsächlich in Achsrichtung innerhalb des jeweiligen Armes (4,5,6,7) in einem Winkel von zirka 90 Grad zu dessen Hauptabstrahlungsrichtung in der Weise umzulenken imstande sind, daß das Licht durch die nach außen weisenden Stirnflächen der Arme nach außen tritt, wobei die reflektierenden Umlenkflächen (8,9,10,18) der Arme (4,5,6,7) jeweils in der Achse (22) der Hauptstrahlungsrichtung des Leuchtkörpers (11) in einer in den Lichtleitkörper (2) weisenden Spitze (23) oder Kante gemeinsam zusammenstoßen, wobei der Lichtleitkörper (2) unterhalb der Spitze (23) oder Kante eine Aussparung (15) aufweist, in der der Leuchtkörper (11) angeordnet ist, der innerhalb der Aussparung (15) in den Bereich der aneinanderstoßenden Enden der Arme (4,5,6,7) reicht und die Aussparung bis unterhalb der Spitze (23) reicht.

2. Verbindungsteil nach Anspruch 1, dadurch gekennzeichnet,
daß an einem Ende des Lichtleitkörpers (2,26) die Arme (4,5,6,7) radial angeformt sind und zwei sich kreuzende, in einer Ebene liegende, antiparallele Armpaare (4,5,6,7) bilden, und die Arme (4,5,6,7) massiv ausgeführt sind.

3. Stecker nach Anspruch 1 oder 2, dadurch gekennzeichnet,
daß derselbe auf der dem Leuchtkörper (11) gegenüberliegenden Seite einen Becher (3) aufweist, der auf den Armen (4,5,6,7) des Lichtleitkörpers aufsitzt und der die Kontaktstifte (12,13,19) beherbergt, wobei Stecker (1) und Becher (3) zylindrisch oder quaderförmig gestaltet sind und die Stirnflächen der Arme (4,5,6,7) in der Mantelebene des Zylinders oder den Begrenzungsflächen des Quaders des Steckers (1) liegen.

4. Verbindungsteil nach Anspruch 1 oder 2, dadurch gekennzeichnet,
daß der Lichtleitkörper (2) zwei oder drei oder fünf oder sechs sternförmig angeordnete Arme (4,5,6,7) aufweist, die voneinander gleiche Bogenabstände besitzen und der Leuchtkörper (11) mittig oder außermittig unterhalb der aneinanderstoßenden Enden der Arme (4,5,6,7) angeordnet ist.

5. Verbindungsteil nach Anspruch 1, dadurch gekennzeichnet,
daß die geneigten Oberflächen der sich gegenüberstehenden Arme (4,5,6,7) des Lichtleitkörpers (2), die jeweils die reflektierende Umlenkfläche des jeweiligen Armes (4,5,6,7) bildet, jeweils als holographische Linsen oder holographische Spiegel ausgebildet sind.

6. Verbindungsteil nach Anspruch 1, dadurch gekennzeichnet,
daß der Lichtleitkörper (47) selbst das Licht wenigstens eines Leuchtkörpers (31) in wenigstens eine oder mehrere Vorzugsrichtungen bündelt.

7. Verbindungsteil nach Anspruch 6, dadurch gekennzeichnet,
daß das von wenigstens einem Leuchtkörper (31) ausgehende und sich im Lichtleitkörper (47) ausbreitende Licht über eine Spiegelfläche desselben auf wenigstens zwei unterschiedliche Refexionsflächen zweier unterschiedlicher Arme geworfen und fokussiert aus den Armen austritt.

8. Verbindungsteil nach Anspruch 1, dadurch gekennzeichnet,
daß der Leuchtkörper mit dem Lichtleitkörper identisch ist und die gewünschte Form des Lichtleitkörpers aufweist.

9. Verbindungsteil nach Anspruch 1 oder 2, dadurch gekennzeichnet,
daß die reflektierenden Umlenkflächen (8,9,10,18) aufgrund Totalreflexion reflektieren oder in Richtung nach innen zum Lichtleitkörper (2) mit einer Spiegelschicht verspiegelt sind.

10. Verbindungsteil nach Anspruch 1, dadurch gekennzeichnet,
daß die geneigten Oberflächen, die jeweils die reflektierende Umlenkfläche für den jeweiligen Arm (4,5,6,7) bilden, als Erhebung (45) mit geneigten Oberflächen (32,33) innerhalb der Aussparung (30) für den Leuchtkörper (31) am Fuße der Aussparung (30) angeordnet sind.

11. Verbindungsteil nach Anspruch 1, dadurch gekennzeichnet,
daß der Lichtleitkörper (34) mehrfache einander zugeordnete, geneigte und reflektierende Oberflächen besitzt, wobei jeweils zwischen einander zugeordneten Oberflächen von einem Leuchtkörper (43) ausgehende Lichtbündel (44) mehrfach innerhalb des Lichtleitkörpers (34) reflektiert und nach außerhalb des Lichtleitkörpers (34) geleitet werden.

12. Verbindungsteil nach Anspruch 1, dadurch gekennzeichnet,
daß statt eines Leuchtkörpers eine Mehrzahl von Leuchtkörpern (31) innerhalb ein- und desselben Lichtleitkörpers (46) zur Anwendung gelangen.

13. Verbindungsteil nach Anspruch 2, dadurch gekennzeichnet,
daß der Lichtleitkörper (2,26) zylindrisch oder quaderförmig gestaltet ist und die Armpaare (4,5,6,7) gleiche Länge in antiparalleler Richtung aufweisen.

## Claims

1. Electrical connector with electrically contacting contact pins (12, 13, 19) or sockets, such as a plug or a coupling, which has a receptacle (14) into which an optical waveguide element (2) made of transmitting material with at least one light element (11) is inserted and through which the feed lines (24, 25) for the contact pins (12, 13, 19) pass, whereby the optical waveguide element (2) has at least two arms (4, 5, 6, 7) that have an ellipsoidal, paraboloidal or cylindrical or a plane-pyramidal surface on each of their ends that abut against each other on the side opposite from the light element (11) in the direction of the longitudinal axis (22) of the main radiation direction of the light element (11), and each of these surfaces forms the reflecting deviation surface of each arm (4, 5, 6, 7) and is capable of deviating the light, mainly in the axial direction within each arm (4, 5, 6, 7) at an angle of about 90 degrees to its main radiation direction in such a way that the light emerges to the outside through the faces of the arms facing towards the outside, whereby the reflecting deviation surfaces (8, 9, 10, 18) of the arms (4, 5, 6, 7) each abut together in a point (23) or edge facing into the optical waveguide element (2), whereby the optical waveguide element (2) has a recess below the point (23) or edge in which the light element (11) is located and extends within the recess (15) into the area of the abutting ends of the arms (4, 5, 6, 7) and the recess extends to below the point (23).

2. Connector according to Claim 1, characterized in that,
at one end of the optical waveguide element (2, 26), the arms (4, 5, 6, 7) are radially attached, thus forming two antiparallel pairs of arms (4, 5, 6, 7) that cross each other and lie in one plane, and the arms (4, 5, 6, 7) are configured so as to be solid.

3. Plug according to Claim 1 or 2, characterized in that,
on the side opposite from the light element (11), said plug has a cup (3) that rests on the arms (4, 5, 6, 7) of the optical waveguide element and that accommodates the contact pins (12, 13, 19), whereby the plug (1) and the cup (3) are cylindrical or cuboidal in shape and the faces of the arms (4, 5, 6, 7) lie in the lateral area of the cylinder or in the boundary surfaces of the cuboid of the plug (1).

4. Connector according to Claim 1 or 2, characterized in that
the optical waveguide element (2) has two or three or five or six arms (4, 5, 6, 7) arranged in a star configuration, which have the same arc distances from each other and the light element (11) is positioned centered or off-center below the ends of the arms (4, 5, 6, 7) that abut against each other.

5. Connector according to Claim 1, characterized in that
the slanted surfaces of the opposing arms (4, 5, 6, 7) of the optical waveguide element (2), each of which forms the reflecting deviation surface of each arm (4, 5, 6, 7), are configured as holographic lenses or holographic mirrors.

6. Connector according to Claim 1, characterized in that
the optical waveguide element (47) itself bundles the light of at least one light element (31) in at least one or more preferential directions.

7. Connector according to Claim 6, characterized in that
the light coming from at least one light element (31) and spreading in the optical waveguide element (47) is cast via a mirror surface thereof onto at least two different reflection surfaces of two different arms and emerges from the arms focused.

8. Connector according to Claim 1, characterized in that
the light element is identical to the optical waveguide element and has the desired shape of the optical waveguide element.

9. Connector according to Claim 1 or 2, characterized in that
the reflecting deviation surfaces (8, 9, 10, 18) reflect due to total reflection or are metal-coated with a mirror layer in the direction towards the inside of the optical waveguide element (2).

10. Connector according to Claim 1, characterized in that
the slanted surfaces, each of which forms the reflecting deviation surface for each arm (4, 5, 6, 7), are arranged as an elevation (45) with slanted surfaces (32, 33) inside the recess (30) for the light element (31) at the foot of the recess (30).

11. Connector according to Claim 1, characterized in that
the optical waveguide element (34) has multiple slanted and reflecting surfaces associated with each other, whereby pencils of rays (44) emerging from between surfaces associated with each other are reflected several times within the optical waveguide element (34) and are emitted to the outside of the optical waveguide element (34).

12. Connector according to Claim 1, characterized in that,
instead of a light element, a plurality of light elements (31) are used within one and the same optical waveguide element (46).

13. Connector according to Claim 2, characterized in that
the optical waveguide element (2, 26) is cylindrical or cuboidal in shape and the pairs of arms (4, 5, 6, 7) are of the same length in the antiparallel direction.

## Revendications

1. Connecteur électrique avec fiches mâles (12,13,19) ou femelles établissant le contact électrique, tel que prise ou prolongateur présentant d'un côté une partie réceptrice (14) dans laquelle est mis en place un corps conducteur optique (2) fabriqué en un matériau laissant passer la lumière qui comprend au moins un corps lumineux (11) et au travers duquel passent des câbles d'alimentation électrique (24,25) pour les fiches de contact (12,13,19), le corps conducteur optique (2) possédant au moins deux bras (4,5,6,7) qui présentent en chacune de leurs extrémités qui se rejoignent du côté opposé au corps lumineux (11), dans le sens de l'axe longitudinal (22) de la direction principale de rayonnement du corps lumineux (11), une surface de forme élipsoïdale ou paraboloïdale ou cylindrique ou plane-pyramidale, chacune de ces surfaces constituant la surface de renvoi réfléchissante du bras (4,5,6,7) correspondant et étant en mesure de renvoyer la lumière principalement dans le sens axial à l'intérieur du bras (4,5,6,7) correspondant dans un angle de 90 degrés environ par rapport à la direction principale de rayonnement, de manière à ce que la lumière soit émise vers l'extérieur par les surfaces extérieures des bras, les surfaces de renvoi réfléchissantes (8,9,10,18) des bras (4,5,6,7) se rejoignant dans l'axe (22) du sens de rayonnement principal du corps lumineux (11) en une pointe (23) ou une arête orientées vers le corps conducteur optique (2), le corps conducteur optique (2) présentant au-dessous de la pointe ou de l'arête une réserve (15) dans laquelle est disposé le corps lumineux (11) qui s'étend jusque dans la zone des extrémités qui se rejoignent des bras (4,5,6,7) et dans la réserve jusqu'au bout de la pointe (23).

2. Connecteur selon la revendlcatlon 1, caractérlsé en ce que
à l'une des extrémités du corps conducteur optique (2,26) les bras (4,5,6,7) ont une forme radiale et constituent deux paires de bras antiparallèles qui se croisent et sont situés sur un plan, et en ce que les bras sont exécutés en massif.

3. Prise selon l'une des revendications 1 ou 2, caractérisée en ce que
celle-ci présente du côté opposé au corps lumineux (11) un boîtier (3) ayant son assise sur les bras (4,5,6,7) du corps conducteur optique et qui héberge les fiches de contact (12,13,19), la prise (1) et le boîtier (3) ayant la forme d'un cylindre ou d'un parallélépipède rectangle, et en ce que les surfaces extérieures des bras (4,5,6,7) sont situées sur le plan de l'enveloppe du cylindre ou sur les surfaces qui délimitent le parallélépipède rectangle de la prise (1).

4. Connecteur selon l'une des revendications 1 ou 2, caractérisé en ce que
le corps conducteur optique (2) présente deux ou trois ou cinq ou six bras (4,5,6,7) disposés en forme d'étoile qui possèdent entre eux le même écart d'arc, et en ce que le corps lumineux (11) est agencé au milieu ou en dehors du milieu, au-dessous des extrémités qui se rejoignent des bras (4,5,6,7).

5. Connecteur selon la revendication 1, caractérisé en ce que
les surfaces inclinées des bras qui se font face (4,5,6,7) du corps conducteur optique (2) forment les surfaces de renvoi réfléchissantes du bras (4,5,6,7) correspondant et en ce qu'elles sont conformées en lentllles holographiques ou miroirs holographiques.

6. Connecteur selon la revendication 1, caractérisé en ce que
le corps conducteur optique (47) lui-même focalise la lumière d'au moins un corps lumineux (31) en au moins une, ou plusieurs directions préférentielles.

7. Connecteur selon la revendication 6, caractérisé en ce que
la lumière partant d'au moins un corps lumineux (31) et se répandant dans le conducteur optique (47) est projetée par une surface miroitante dudit corps conducteur optique sur au moins deux surfaces réfléchissantes différentes de deux bras différents et sort focalisée des bras.

8. Connecteur selon la revendication 1, caractérisé en ce que
le corps lumineux est identique au corps conducteur optique et présente la forme requise du corps conducteur optique.

9. Connecteur selon l'une des revendications 1 ou 2, caractérisé en ce que
les surfaces de renvoi réfléchissantes (8,9,10,18) réfléchissent la lumière du fait d'une réflexion totale ou sont recouvertes d'une couche miroitante qui miroite vers l'intérieur du corps conducteur optique (2).

10. Connecteur selon la revendication 1, caractérisé en ce que
les surfaces inclinées qui constituent chacune les surfaces de renvoi réfléchissantes des bras (4,5,6,7) correspondants forment une élévation (45) aux surfaces inclinées (32,33) à l'intérieur de la réserve (30) pour le corps lumineux (31), au fond de la réserve (30).

11. Connecteur selon la revendication 1, caractérisé en ce que
le corps conducteur optique (34) possède plusieurs surfaces inclinées assignées les unes aux autres et en ce que des faisceaux de lumière (44) partant d'un corps lumineux (43) sont réfléchis plusieurs fois entre des surfaces assignées à l'intérieur du corps conducteur optique (34) et sont guidés vers l'extérieur du corps conducteur optique (34).

12. Connecteur selon la revendication 1, caractérisé en ce que
au lieu d'un corps lumineux, plusieurs corps lumineux (31) trouvent usage à l'intérieur d'un seul et même corps conducteur optique (46).

13. Connecteur selon la revendication 2, caractérisé en ce que
le corps conducteur optique (2,26) a la forme d'un cylindre ou d'un parallélépipède rectangle, et en ce que les paires de bras (4,5,6,7) présentent la même longueur dans une direction antiparallèle.
